# EUROPÄISCHE PATENTSCHRIFT

(11) **EP 1 902 976 B1**
(45) Veröffentlichungstag und Bekanntmachung des Hinweises auf die Patenterteilung: **17.02.2010**
(21) Anmeldenummer: 06120926.8
(22) Anmeldetag: 19.09.2006
(51) Int. Cl.: B65G 1/04, B65G 1/137, B65G 1/08

(54) **Verfahren zum schnellen Auslagern von Stückgütern aus einem automatisierten Lager sowie automatisierte Lager hierfür**
Method for fast removal of piece goods from an automated storage and a corresponding automated storage
Procédé pour le déstockage rapide des articles d'un magasin de stockage et un magasin de stockage correspondant

(43) Veröffentlichungstag der Anmeldung: 26.03.2008
(60) Teilanmeldung: 09161165.7
(73) Patentinhaber: Rowa Automatisierungssysteme GmbH, 53539 Kelberg (DE)
(72) Erfinder: Wagner, Rudolf, 54550 Daun (DE)
(74) Vertreter: Schmidt, Frank-Michael

(56) Entgegenhaltungen:
- DE-A1- 19 815 883
- DE-A1- 19 946 800

## Beschreibung

Die Erfindung betrifft ein Verfahren zum Auslagern wenigstens eines Stückguts aus einem automatisierten Lager für eine Vielzahl von Stückgütern unterschiedlicher Art und Abmessungen, wobei das Lager mehrere entlang einer ersten Raumkoordinate nebeneinander angeordnete Lagerschächte, ein in der ersten Raumkoordinate und wenigstens einer dazu quer verlaufenden zweiten Raumkoordinate verfahrbares Bediengerät aufweist, wobei das Bediengerät einen Pufferschacht aufweist, der mehrere Stückgüter aufnehmen kann, wobei sich das wenigstens eine auszulagernde Stückgut an einer bekannten Position innerhalb einer Reihe von in einem Lagerschacht enthaltenen Stuckgütern unterschiedlicher Art befindet, wobei (a) ein erstes Ende des Pufferschachts an ein erstes Ende des Lagerschachts herangefahren wird, (b) das wenigstens eine auszulagernde Stückgut und sämtliche gegebenenfalls zwischen dem ersten Ende des Lagerschachts und dem wenigstens einen auszulagernden Stückgut vorhandenen Stückgüter in den Pufferschacht bewegt werden, (c) der Pufferschacht zu einer Abgabestelle zur Übernahme auszulagernder Stückgüter von dem Bediengerät gefahren und das wenigstens eine auszulagernde Stückgut in die Abgabestelle bewegt wird und (d) das erste Ende des Pufferschachts wieder an das erste Ende desselben oder eines anderen Lagerschachts herangefahren wird und die in dem Pufferschacht verbliebenen Stückgüter in den Lagerschacht hineinbewegt werden. Darüber hinaus betrifft die Erfindung ein automatisiertes Lager zur Ausführung dieses Verfahrens.

Verfahren zum Auslagern von Stückgütern und automatisierte Lager der eingangs genannten Art sind aus der (zum Anmeldezeitpunkt der vorliegenden Patentanmeldung noch unveröffentlichten) europäischen Patentanmeldung EP 05 019 718.5 derselben Anmelderin bekannt. Diese Patentanmeldung beschreibt ein automatisiertes Regallager, bei dem die Lagerschachte geneigt sind und das Bediengerät zwei Pufferschächte aufweist, die ebenfalls geneigt sind. Die Pufferschächte des Bediengeräts können aus den Lagerschächten herausrutschende Stuckgüter (d. h. Arzneimittelpackungen) unterschiedlicher Art und Größe aufnehmen. Darüber hinaus ist es möglich, dass das Bediengerät die in den Pufferschächten enthaltenen unterschiedlichen Stückgüter in die Lagerschächte hinaufschiebt.

Es hat sich gezeigt, dass die in der älteren Patentanmeldung beschriebenen Auslagerungsverfahren noch relativ langsam sind. Das Bediengerät mit den zwei Pufferschächten ist aufgrund der den beiden Pufferschächten zugeordneten Ansteuervorrichtungen relativ schwer, so dass es nur relativ langsam beschleunigt werden kann. Werden - wie bei dem oben beschriebenen Verfahren - in den ersten Schacht die nicht-auszulagernden Stückgüter und in den zweiten Pufferschacht das oder die auszulagernden Stückgüter aufgenommen, so gibt es für das anschließende Auslagern grundsätzlich zwei Möglichkeiten: einerseits kann das Bediengerät mit den beiden befüllten Pufferschächten schnell zu einer Ausgabestelle fahren, wo das oder die auszulagernden Stückgüter aus dem zweiten Pufferschacht auf eine Fördereinrichtung zu einem Ausgabeplatz übergeben werden. Anschließend fährt das Bediengerät zu dem Lagerschacht zurück und schiebt die noch in dem ersten Pufferschacht befindlichen nicht-auszulagernden Stückgüter in den Lagerschacht zurück. Bei der alternativen Vorgehensweise werden die nicht-auszulagernden Stückgüter zuerst in den Lagerschacht zurückgeschoben, bevor das auszulagernde Stückgut oder die auszulagernden Stückgüter zu der Ausgabestelle transportiert werden. Im ersten Fall ergibt sich eine zusätzliche Masse durch die im ersten Pufferschacht liegenden nicht-auszulagernden Stückgüter, die die Beschleunigung weiter begrenzt (bei gleicher Kräftebeanspruchung). Im zweiten Fall sind eine zusätzliche Anfahrbewegung und das Hochschieben der nicht-auszulagernden stückgüter in den Lagerschacht erforderlich, bevor der eigentliche Auslagerungsvorgang beginnen kann. Beide Vorgehensweisen erweisen sich als zu langsam. Verzichtet man dagegen gänzlich auf den zweiten Pufferschacht des Bediengeräts, um die Masse des Bediengeräts zu verringern, so ergibt sich folgender Ablauf: Aus dem Lagerschacht werden sowohl die nicht-auszulagernden Stückgüter als auch das auszulagernde Stückgut in den Pufferschacht des Bediengeräts aufgenommen. Dann fährt das Bediengerät mit sämtlichen Stückgütern zur Ausgabestelle, wo lediglich das auszulagernde Stückgut herausgeschoben wird. Dann fährt das Bediengerät zurück zum Lagerschacht, um die nicht auszulagernden Stückgüter zurückzuschieben. Erst danach kann das nächste auszulagernde Stückgut (gegebenenfalls wieder mit den davor im Lagerschacht befindlichen nicht-auszulagernden Stückgütern) von dem Bediengerät aufgenommen werden und zur Ausgabestelle transportiert werden. Befinden sich die Lagerschächte mehrerer nacheinander auszulagernder Stückgüter relativ weit von der Abgabestelle entfernt und sind die Stückgüter tief innerhalb des Lagerschachts angeordnet, so dass eine große Anzahl nicht-auszulagernder Stückgüter jeweils mittransportiert werden muss, so ergibt sich insgesamt ein relativ langsamer Auslagerungsvorgang bei mehreren hintereinander auszulagernden Stückgütern.

Aus der DE 198 15 883 A1 ist eine Kommissionieranlage für Arzneimittelpackungen bekannt, wie sie im Pharma-Großhandel Anwendung findet. Dort werden regelmäßig große Mengen gleichartiger Arzneimittelpackungen kommissioniert. Aus diesem Grunde sind eine Vielzahl von Lagerschächten vorgesehen, die jeweils ausschließlich gleichartige Arzneimittelpackungen enthalten. Zusätzlich gibt es neben den Lagerschächten der eigentlichen Kommissionierautomaten noch Übervorratsregale, in deren Schächten ebenfalls jeweils gleichartige Arzneimitteipackungen gelagert sind. Zum Nachfüllen des Lagerschächte der Kommissionierautomaten wird ein Bediengerät verwendet, dass jeweils den vollständigen Stapel gleichartiger Arzneimittelpackungen aus einem Schacht der Übervorratsregale entnimmt und die Packungen des vollständigen Stapels anschließend in die Schächte des Kommissionierautomaten einfüllt.

Aufgabe der Erfindung ist es, bei den Verfahren und automatisierten Lagern der eingangs genannten Art die durchschnittliche Auslagergeschwindigkeit (bzw. die durchschnittliche Auslagerfrequenz) zu erhöhen.

Diese Aufgabe wird erfindungsgemäß durch ein Verfahren mit den Merkmalen des Anspruchs 1 bzw. ein automatisiertes Lager mit den Merkmalen des Anspruchs 4 gelöst.

Bei der erfindungsgemäßen Lösungwerden mehrere Abgabestellen in dem Lager vorgesehen, wobei sich jede Abgabestelle an einem oberen Ende eines geneigten Abgabeschachts befindet und an den Abgabestellen übergebene Stückgüter in den zugehörigen Abgabeschacht rutschen. Der Pufferschacht, der sowohl die nicht-auszulagernden Stückgüter als auch das wenigstens eine auszulagernde Stückgut enthält, wird zu einer Abgabestelle gefahren, wo das wenigstens eine auszulagernde Stückgut in den zugehörigen Abgabeschacht bewegt wird. Anschließend werden die nicht-auszulagernden Stückgüter in den Lagerschacht zurückgeschoben und ein nächstes auszulagerndes Stückgut aus einem Lagerschacht entnommen (gegebenenfalls mit den davor angeordneten nicht-auszulagernden Stückgütern). Auch dieses wird zu dem Abgabeschacht transportiert und in diesen bewegt, so dass eine Anzahl auszulagernder Stückgüter in wenigstens einem der mehreren Abgabeschächte angesammelt wird. Die in dem wenigstens einen Abgabeschacht angesammelten auszulagernden Stückgüter werden dann nach Freigabe einer am unteren Ende des Abgabeschachts angeordneten Sperre auf eine Fördereinrichtung übergeben und von der Fördereinrichtung zu einem Ausgabeplatz transportiert. Das Sammeln auszulagernder Stuckgüter in einem Abgebeschacht erlaubt die Vorkommissionierung einer vorgegebenen Anzahl und Art von Stückgütern, insbesondere von Arzneimittelpackungen. Beispielsweise können typische (häufig angeforderte) Kombinationen von Arzneimittelpackungen vorkommissioniert werden oder es können auch vorbestellte Arzneimittelpackungen vorkommissioniert werden. Diese können dann in einer einzigen Abgabebewegung durch Auslösen der am Abgabeschacht angeordneten Sperre schnell ausgelagert werden. Dies verringert die durchschnittliche Abgabefrequenz.

Vorteilhafte Weiterbildungen dieser Lösung sind in den Unteransprüchen 2 bis 3 und 5 bis 8 gekennzeichnet.

Soweit hier und in den Ansprüchen von einer "Raumkoordinate" gesprochen wird, sollen unter den Begriff grundsätzlich auch gekrümmte Koordinaten fallen. Beispielsweise können die Lagerschächte/Regalböden entlang einer bogenförmigen ersten Raumkoordinate angeordnet sein. Ein "Pufferschacht" soll irgendeine Auflage oder Halterung für die Stückgüter sein, in der die Stückgüter, sofern mehrere enthalten sind, in einer Reihenfolge angeordnet sind, die der Reihenfolge ihrer Aufnahme in den Puffer entspricht.

Im Folgenden wird die Erfindung anhand von in den Zeichnungen dargestellten bevorzugten Ausführungsformen näher erläutert. In den Zeichnungen zeigen:
Fig. 1.: eine schematische Seitenansicht einer bevorzugten Ausführungsform des erfindungsgemäßen automatisierten Lagers;
Fig. 2: eine schematische Seitenansicht einer Ergänzung des erfindungsgemäßen automatisierten Lagers; und
Fig. 3: eine schematische Seitenansicht einer anderen Ergänzung des erfindungsgemäßen automatisierten Lagers.

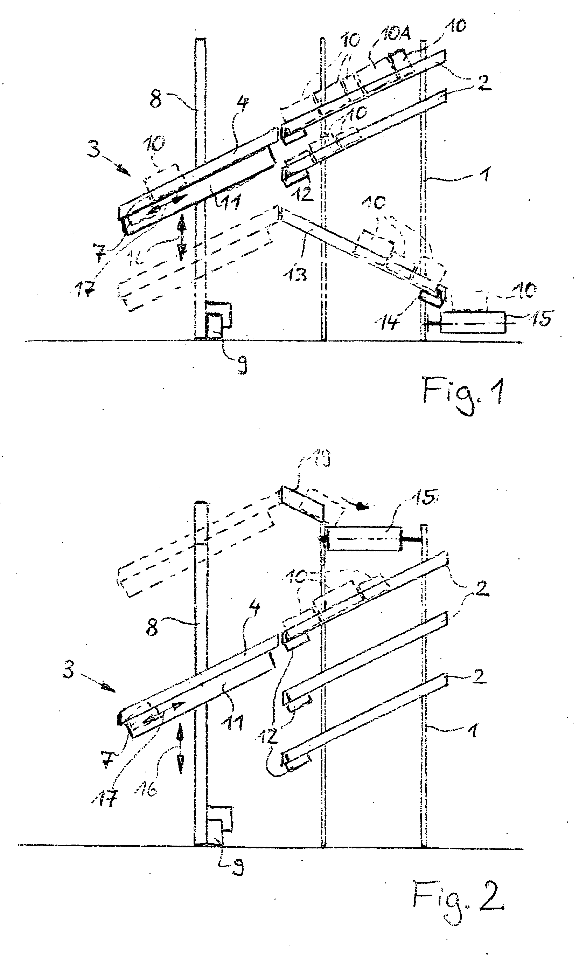

Die in Figur 1 schematisch dargestellte Ausführungsform eines automatisierten Lagers für eine Vielzahl von Stückgütern unterschiedlicher Art und Abmessungen, insbesondere für eine Vielzahl unterschiedlicher Arzneimittelpackungen, umfasst ein als Regal 1 bezeichnetes Gestell mit mehreren Lagerschächten 2. Die Lagerschächte sind vorzugsweise in Lagerebenen nebeneinander angeordnet, wobei jeweils mehrere Lagerebenen übereinander angeordnet sind. Es sind eine Vielzahl von Ausführungsformen für die Lagerschächte, die Lagerebenen und das tragende Gestell denkbar. Bei dem in Figur 1 dargestellten Regal 1 stehen die senkrechten Stützen auf einem Boden. Sie können aber auch an einer Wand montiert sein. Die Lagerschächte 2 werden beispielsweise aus Führungs- und Halteschienen gebildet, die auf zwischen senkrechten Stützen montierten waagerechten Traversen befestigt sind. In einem einfachen Fall werden die Lagerschächte 2 durch zwei L-förmige oder T-förmige Profilstangen gebildet, die einen vorgegebenen Abstand haben. Die Breite der Lagerschächte, das heißt der Abstand der seitlichen Begrenzungswände, ist an die jeweils aufzunehmenden Stückgüter 10 (Arzneimittelpackungen) angepasst. Vorzugsweise sind in einem Regal eine vorgegebene Anzahl unterschiedlicher Breiten vorgesehen, wobei Lagerschächte unterschiedlichster Breite nebeneinander in einer Lagerebene angeordnet sein können. Es ist aber auch denkbar, dass in einer Lagerebene oder einem Teil der Lagerebene mehrere Lagerschächte jeweils gleicher Breite nebeneinander angeordnet werden. Die Verteilung und die Auswahl der Breiten der Lagerschächte hängt von den erwarteten Abmaßen der Stückgüter ab und wird bei der Installation des Regals eingestellt. Die Breiteneinstellungen sind vorzugsweise variabel und können bei einer Ausführungsform auch durch eine Steuereinrichtung automatisch angepasst werden.

Bei den in den Figuren 1 bis 3 dargestellten Ausführungsformen sind die Lagerschächte 2 geneigt. Dabei rutschen die in den Lagerschächten 2 befindlichen Stückgüter 10 nach unten gegen einen von einer Sperr- und Auslöseeinrichtung 12 gebildeten Anschlag.

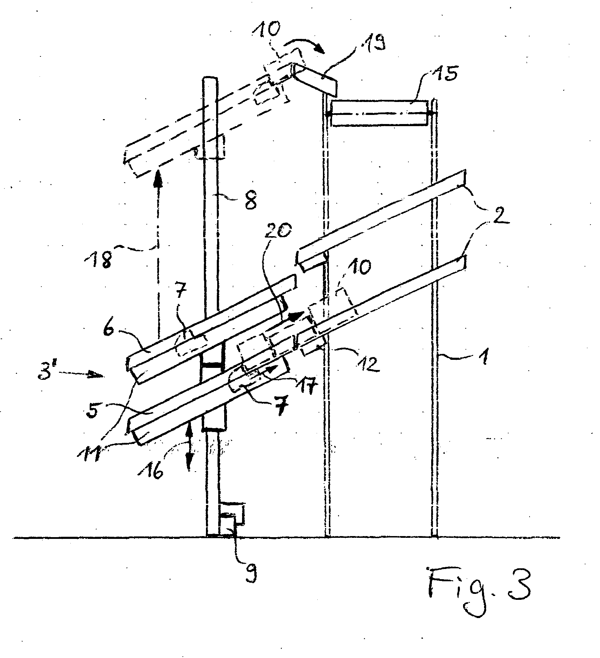

Vor den unteren Enden der Lagerschächte 2 kann ein Bediengerät 3 verfahren werden, wobei das Bediengerät 3 zum Auslagern der Stückgüter 10 aus den Lagerschächten 2 und vorzugsweise auch zum Einlagern der Stückgüter 10 in die Lagerschächte 2 dient. Das Bediengerät 3 weist bei den in den Figuren 1 und 2 gezeigten Ausführungsformen einen Pufferschacht 4 und bei der in Figur 3 skizzierten Ausführungsform zwei Pufferschächte 5 und 6 auf. Die Pufferschächte 4, 5 und 6 sind vorzugsweise ebenfalls geneigt, wobei die Neigung vorzugsweise an die der Lagerschächte 2 angepasst ist. Das obere Ende eines Pufferschachts 4, 5, 6 kann an das untere Ende eines Lagerschachts 2 derart herangefahren werden, dass die in dem Lagerschacht 2 enthaltenen Stückgüter 10 beim Betätigen der Sperr- und Auslöseeinrichtung 12 des Lagerschachts 2 in den Pufferschacht 4, 5 oder 6 rutschen. Die Sperr- und Auslöseeinrichtung 12 kann eine aktive Auslöseeinrichtung sein, die durch elektrische Steuersignale angesteuert wird, wobei jeder Lagerschacht mit einer eigenen Auslöseeinrichtung 12 versehen ist und ihm ein separates Steuersignal zugeführt wird. Alternativ kann die Sperr- und Auslöseeinrichtung passiv sein, das heißt von dem herangefahrenen Bediengerät 3 dann betätigt werden, wenn sich der Pufferschacht in einer zur Aufnahme eines Stückguts geeigneten Position befindet. Bei einem einfachen Fall einer passiven Sperr- und Auslöseeinrichtung 12 wird diese von einem in den Lagerschacht 2 hinein fahrenden Schwenkhebel gebildet, wobei der Schwenkhebel von einem Betätigungsfinger des Bediengerätes 3 betätigt wird. Bei einer anderen einfachen Ausführungsform ist die in den Pufferschacht 2 hinein fahrende Sperre am Gestell des Regals 1 befestigt und unbeweglich, wobei zum Auslösen der Sperre das untere Ende des Lagerschachts 2 von einem Betätiqunqsfinger des Bediengeräts 3 derart angehoben wird, dass die Sperre aus dem Lagerschacht 2 herausbewegt wird.

Das den Pufferschacht 4 aufweisende Bediengerät 3 ist an einer senkrechten Führungsschiene 8 montiert, wobei die Führungsschiene 8 an einer oder mehreren waagerechten Führungsschienen 9 gehalten wird und mit Hilfe eines (nicht gezeigten) Antriebs waagerecht verfahren werden kann. Die waagerechte Führungsschiene 9 braucht nicht geradlinig angeordnet zu sein; es sind auch Kurvenführungen denkbar. Ähnliches gilt für die senkrechte Führungsschiene; es sind auch Ausführungsformen mit schrägen Führungsschienen denkbar. Das Bediengerät 3 weist mehrere Antriebe und Steuereinrichtungen auf, die in Figur 1 mit dem Bezugszeichen 11 zusammengefasst sind, wobei Steuereinrichtungen und Antriebe zum senkrechten Bewegen des Bediengeräts an der Führungsschiene 8 und Steuereinrichtungen und Antriebe zum Drehen des Pufferschachts 4 (beispielsweise um 180° zum einem in Figur 1 nicht gezeigten zweiten Regal gegenüber dem ersten Regal 1) sowie Steuereinrichtungen und Antriebe zum Betätigen eines Schiebers 7 zum Hochschieben von in dem Pufferschacht 4 einliegenden Stückgütern 10 (zum Einlagern in den Lagerschacht 2) vorgesehen sein können. Die senkrechte Bewegung des Bediengeräts 3 entlang der Führungsschiene 8 ist durch den Pfeil 16 und die Bewegung des Schiebers 7 zum Hinaufschieben der Stückgüter 10 durch den Pfeil 17 veranschaulicht.

Bei den Ergänzungen gemäß den Figuren 2 und 3 sind die für die Figur 1 bereits beschriebenen Elemente mit den gleichen Bezugszeichen gekennzeichnet. Das in Figur 3 dargestellte Bediengerät 3' unterscheidet sich von den in den Figuren 1 und 2 dargestellten Bediengerät 3 dadurch, dass es einen ersten Pufferschacht 5 und einen darüber angeordneten zweiten Pufferschacht 6 aufweist. Insbesonders bei der weiter unten beschriebenen schnellen Auslagerung von Stückgütern 10 aus einem Lagerschacht 2 kommen den beiden Pufferschächten 5 und 6 des Bediengeräts 3' gemäß Figur 3 unterschiedliche Funktionen zu. Erfindungsgemäß ist der zweite Pufferschacht 6 nicht nur gemeinsam mit den ersten Pufferschacht 5 entlang der Führungsschiene 8 senkrecht bewegbar; der zweite Pufferschacht 6 ist auch unabhängig von dem ersten Pufferschacht 5 senkrecht bewegbar. So kann der zweite Pufferschacht 6 über dem ersten Pufferschacht 5 entlang der Führungsschiene 8 nach oben bewegt werden, während der erste Pufferschacht 5 an einer vorgegebenen Position verbleibt. Das unabhängige Aufwärtsbewegen des zweiten Pufferschachts 6 ist durch den in Strichlinie gezeichneten Pfeil 18 veranschaulicht.

Es wird wieder auf die bevorzugte Ausführungsform (Grundform) Bezug genommen, die in Figur 1 skizziert ist. Erfindungsgemäß sind bei diesem automatisierten Lager mehrere Abgabeschächte 13 vorgesehen. Die Abgabeschächte 13 sind geneigt, wobei ihr oberes Ende der Gasse zugewandt ist, in der sich das Bediengerät 3 bewegt. In Figur 1 ist aus Gründen der Anschaulichkeit lediglich ein Abgabeschacht 13 skizziert. Die weiteren Abgabeschächte 13 sind entweder neben dem gezeigten Abgabeschacht in derselben Lagerebene oder auch darunter oder darüber angeordnet, wobei die Abgabeschächte entweder an einem Ort des Lagers konzentriert oder entlang des Regals 1 verteilt angeordnet sein können. Eine Verteilung der Abgabeschächte 13 (beispielsweise äquidistant) entlang des Regals 1 verkürzt die durchschnittlichen Fahrwege des Bediengeräts 3. Die Abgabeschächte 13 sind bei der in Figur 1 skizzierten Ausführungsform in demselben Regal 1 wie die Lagerschächte 2 angeordnet. Bei einer alternativen Ausführungsform können die Abgabeschächte 13 auch in einem auf der gegenüberliegenden Seite der Gasse des Bediengeräts 3 angeordneten weiteren Regal vorgesehen sein.

Bei den in den Figuren 1 bis 3 dargestellten Ausführungsformen sind die Lagerschächte 2 vorzugsweise gemischt, das heißt mit Stückgütern unterschiedlicher Art und auch unterschiedlicher Abmessungen gefüllt. Die Stückgüter sind dabei vorzugsweise solche, die weniger häufig und nur in geringer Stückzahl ausgegeben werden (sogenannte "Langsamdreher"). Vorzugsweise weist das automatisierte Lager darüber hinaus Lagerschächte für Stückgüter auf, die relativ häufig und/oder jeweils in größerer Stückzahl benötigt werden (sogenannte "Schnelldreher"). Diese (in den Figuren nicht dargestellten) Lagerschächte enthalten dann jeweils eine Mehrzahl von Stückgütern gleicher Art und Dimensionen. Bei einer bevorzugten Ausführungsform des automatisierten Lagers sind diese Schnelldreher-Lagerschächte im Unterschied zu den in den Figuren gezeigten Langsamdreher-Lagerschächten 2 nicht zur Gasse des Bediengeräts hin geneigt, sondern fallen von der Gasse des Bediengeräts 3 ab, so dass das obere Ende der Schnelldreher-Lagerschächte der Gasse des Bediengeräts 3 zugewandt ist, wie dies auch bei den oben beschriebenen erfindungsgemäßen Abgabeschächten 13 der Fall ist. Bei einer bevorzugten Ausführungsform ist es deshalb vorgesehen, dass jeweils ungenutzte Schnelldreher-Lagerschächte als Abgabeschächte verwendet werden.

Am unteren Ende der Abgabeschächte 13 ist wiederum eine Sperr- und Auslöseeinrichtung 14 angeordnet, die einen in den Abgabeschacht 13 hineinragenden Anschlag für die in dem Schacht hinabrutschenden Stückgüter 10 bildet. Diese Sperr- und Auslöseeinrichtung 14 kann wiederum aktiv (das heißt mit einer eigenen elektromechanischen Betätigungs- und Steuereinrichtung versehen) oder passiv sein. Bei der passiven Ausführungsform wird die Sperr- und Auslöseeinrichtung 14 von einem Betätigungsfinger ausgelöst, der an einer Fördereinrichtung 15 zum Transportieren der aus dem Abgabeschacht entnommenen Stückgüter 10 zu einem Ausgabeplatz vorgesehen ist. Die Fördereinrichtung 15, die die aus dem Abgabeschacht 13 austretenden Stückgüter 10 aufnimmt und zu dem Ausgabeplatz transportiert, umfasst vorzugsweise ein Förderband.

Um bei dem in Figur 1 schematisch dargestellten Lager ein Stückgut 10A auszulagern, welches sich in einem Abgabeschacht 2 an einer bekannten Position innerhalb einer Reihe von in dem Lagerschacht 2 enthaltenen Stückgütern 10 befindet, wird wie folgt vorgegangen. Das obere Ende des Pufferschachts 4 des Bediengeräts 3 wird an das untere Ende des Lagerschachts 2, in dem sich das auszulagernde Stückgut 10A befindet, herangefahren. Dazu wird die senkrechte Führungsschiene 8 entlang der waagerechten Führungsschiene 9 und das Bediengerät 3 entlang der senkrechten Führungsschiene 8 bewegt, bis die gewünschte Position erreicht ist. Gegebenenfalls wird der Pufferschacht 4 des Bediengeräts 3 um die senkrechte Führungsschiene 8 herum gedreht (beispielsweise um 180°, wenn das obere Ende des Pufferschachts 4 einem gegenüberliegenden Regal zugewandt war, oder auch um 90°, wenn der Pufferschacht 4 während des Verfahrens des Bediengeräts 3 in Richtung der Fahrgasse orientiert wird).

Wenn das obere Ende des Pufferschachts 4 an das untere Ende des Lagerschachts 2 herangefahren ist, wird die Sperr- und Auslöseeinrichtung 12 des Lagerschachts 2 derart betätigt, dass sämtliche vor dem auszulagernden Stückgut 10A befindlichen Stückgüter 10 und das auszulagernde Stückgut 10A in den Pufferschacht 4 hineinrutschen. Es ist auch denkbar, dass zunächst weitere, oberhalb des auszulagernden Stückguts 10A angeordnete Stückgüter 10 in den Pufferschacht 4 aufgenommen werden und diese anschließend mit Hilfe des Schiebers 7 in den Lagerschacht 2 hinter die Sperre 12 zurückgeschoben werden. Nachdem die unterhalb des auszulagernden Stückguts 10A befindlichen Stückgüter und das auszulagernde Stuckgut 10A in den Pufferschacht 4 aufgenommen worden sind, wird das Bediengerät derart verfahren, dass sich das obere Ende des Pufferschachts 4 an dem oberen Ende eines Abgabeschachts 13 befindet. Dann werden die in dem Pufferschacht 4 befindlichen Stückgüter 10 mit Hilfe des Schiebers 7 soweit nach oben geschoben, bis das auszulagernde Stückgut in den Abgabeschacht 13 eingetreten ist. Dann stoppt der Schieber 7 und wird gegebenenfalls wieder ein kleines Stück- zurückgefahren, damit die übrigen Stückgüter sicher im Pufferschacht 4 verbleiben.

Es ist auch denkbar, dass auf diese Weise mehrere, unmittelbar hintereinander in einem Lagerschacht 2 angeordnete auszulagernde Stückgüter 10A in den Abgabeschacht 13 transportiert werden.

Anschließend werden die in dem Pufferschacht 4 verbliebenen, nicht auszulagernden Stückgüter 10 wieder in den Lagerschacht 2, aus dem sie entnommen wurden, oder auch alternativ in einen anderen Lagerschacht 2 zurücktransportiert, indem das obere Ende des Pufferschachts 4 zu dem unteren Ende des jeweiligen Lagerschachts 2 gefahren wird und die Stückgüter mit Hilfe des Schiebers 7 in den Lagerschacht 2 hinter die Sperre 12 zurückgeschoben werden.

Anschließend werden die beschriebenen Abläufe für weitere auszulagernde Stückgüter 10A wiederholt. Dabei wird eine gewünschte Zusammenstellung mehrerer auszulagernder Stückgüter in einem Abgabeschacht 13 gesammelt. Beispielsweise ist es denkbar, dass in einem Abgabeschacht 13 die Arzneimittelpackungen gesammelt werden, die Bestandteil einer später abzuholenden Bestellung sind. Es ist auch denkbar, dass mehrere gleichartige Arzneimittelpackungen in einem Abgabeschacht gesammelt werden, Sofern eine größere Menge dieses Arzneimittels bestellt wird. Darüber hinaus ist es auch denkbar, dass mehrere Bestellungen, die zu unterschiedlichen Zeitpunkten ausgelagert werden sollen, in einem Abgabeschacht 13 gesammelt werden, wobei sich die Stückgüter der zuerst auszulagernden Bestellung an den unteren Positionen des Abgabeschachts 13 befinden und die Stückgüter der später abzuholenden Bestellung anschließend in den Abgabeschacht 13 an die oberen Positionen transportiert werden. Wenn dann die auszulagernden Stückgüter endgültig zum Ausgabeplatz transportiert werden sollen, wird die Sperr- und Auslöseeinrichtung 14 des zugehörigen Abgabeschachts 13 betätigt. Es ist auch denkbar, dass Arzneimittelpackungen einer Bestellung in mehreren Abgabeschächten 13 gelagert werden, beispielsweise deshalb, weil sie stark voneinander abweichende Dimensionen haben und deshalb nicht in demselben Abgabeschacht 13 aufgenommen werden können. In diesem Fall werden die Sperr- und Auslöseeinrichtungen 14 der mehreren Abgabeschächte 13, die Arzneimittelpackungen derselben Bestellung enthalten, unmittelbar nacheinander betätigt.

Bei der Weiterbildung oder Ergänzung des erfindungsgemäßen automatisierten Lagers sind neben den in Figur 2 nicht dargestellten Abgabeschächten mehrere Abgabestellen entlang des Regals 1, das heißt entlang der sich in die Tiefe der Skizze gemäß Figur 2 erstreckenden Raumkoordinate, etwa gleichmäßig verteilt angeordnet. Dies bedeutet, dass die mehreren Abgabestellen beispielsweise äquidistant angeordnet sind. Dies ist insbesondere dann vorgesehen, wenn das Regal 1 über sein gesamte Länge etwa gleichmäßig mit Stückgütern 10 oder Lagerschächten 2 bestückt werden kann. Für den Fall, dass das Regal von vornherein so ausgelegt ist, dass in einem ersten Abschnitt eine größere Anzahl (Dichte) von Lagerschächten 2 vorgesehen ist und in einem daneben angeordneten Abschnitt eine geringere Anzahl (Dichte), so kann die erfindungsgemäße gleichmäßige Beanstandung der Abgabestellen auch bedeuten, dass die Abgabestelle gleichmäßig bezogen auf die Anzahl der zugeordneten Lagerschächte beabstandet sind, das heißt dort, wo eine größere Anzahl von Lagerschächten pro Regallange vorgesehen ist, auch die Abgabestellen dichter, das heißt mit geringerem Abstand, angeordnet sind. Aus diesem Grund wurde auch in der allgemeinsten Formulierung des Anspruchs der Begriff der "etwa gleichmäßig" verteilten Anordnung und nicht etwa der Begriff der "äquidistanten" Anordnung gewählt, da eine äquidistante Anordnung nur der häufigste Spezialfall ist, bei dem die Anzahl der Lagerschächte pro Regallänge entweder außer Betracht bleibt oder etwa konstant ist.

Vorzugsweise sind nicht nur lediglich mehrere Abgabestellen entlang des Regals gleichmäßig verteilt angeordnet, sondern es sind eine Vielzahl von Abgabestellen vorgesehen. Bei der bevorzugten Ausführungsform, die auch in Figur 2 skizziert ist, wird die Vielzahl von Abgabestellen, die durch das Bediengerät 3 ansteuerbar sind, dadurch gebildet, dass sich eine Fördereinrichtung, beispielsweise ein Förderband, über die gesamte Länge des Regals erstreckt, wobei das Förderband 15 beispielsweise oberhalb des Regals 1 angeordnet ist. Das Bediengerät 3 kann dann auszulagernde Stückgüter praktisch an jeder Stelle entlang des Regals 1 auf das Förderband 15 übergeben, so dass man von einer Vielzahl von möglichen Abgabestellen entlang des Förderbands 15 sprechen kann.

Anstelle des Förderbands 15 könnten auch mehrere Rutschen und andere Transporteinrichtungen vorgesehen sein, bei denen die Übergabeorte für das Bediengerät 3 gleichmäßig verteilt entlang des Regals 1 angeordnet sind. Sämtliche Transporteinrichtungen transportieren die übergebenen Stückgüter zu einen Ausgabeplatz. Bei Verwendung des Förderbands kann dieses auch unter den Lagerschächten 2 des Regals 1 oder zwischen den Lagerschächten 2 angeordnet sein.

Zur Auslagerung eines Stückguts aus einen automatisierten Lager gemäß der Weiterbildung, von der ein Beispiel in Figur 2 skizziert ist, wird wie folgt vorgegangen. Das auszulagernde Stückgut befindet sich beispielsweise an einer vorgegebenen Position inmitten einer Reihe von Stückgütern 10 in einem Lagerschacht 2. Zunächst wird das Bediengerät zusammen mit der senkrechten Führungsschiene entlang der Gasse und dann entlang der Führungsschiene 8 derart verfahren, dass sich das obere Ende des Pufferschachts 4 an dem unteren Ende desjenigen Lagerschachts 2 befindet, in dem das auszulagernde Stückgut gelagert ist. Dann wird die am unteren Ende des Lagerschachts 2 angeordnete Sperre 12 freigegeben, so dass das auszulagernde Stückgut und sämtliche zwischen dem unteren Ende des Lagerschachts 2 und dem auszulagernden Stückgut vorhandenen Stückgüter in den Pufferschacht 4 hineinrutschen. Sollten noch weitere, oberhalb des gewünschten Stückguts angeordnete Stückgüter aus dem Lagerschacht 2 in den Pufferschacht 4 hineinrutschen, so werden diese sofort hinter die Sperre 12 zurückgeschoben. Anschließend wird das Bediengerät 3 mit dem Pufferschacht 4 und den darin befindlichen Stückgütern 10 zu der nächstliegenden Abgabestelle gefahren. Bei dem in Figur 2 dargestellten Fall, bei dem sich ein Förderband 15 über die gesamte Länge des Regals 1 erstreckt, wird das Bediengerät 3 lediglich senkrecht nach oben gefahren, so dass sich das obere Ende des Pufferschachts 4 an dem oberen Ende einer Rutsche 19 befindet, auf die das auszulagernde Stückgut durch Hochschieben des Schiebers 17 übergeben wird. Die Rutsche erstreckt sich vorzugsweise ebenfalls über die gesamte Länge des Regals 1. Bei einer alternativen Ausführungsform kann die Rutsche 19 auch entfallen, wobei dann das auszulagernde Stückgut vom oberen Ende des Pufferschachts 4 direkt auf das Förderband 15 übergeben wird.

Anschließend fährt das Bediengerät 3 wieder zurück zu dem Lagerschacht 2, vorzugsweise einfach senkrecht nach unten, und schiebt die nicht auszulagernden Stückgüter zurück in den Lagerschacht 2. Es ist auch denkbar, dass die Stückgüter in einen anderen Lagerschacht 2 zurückgeschoben werden. Selbstverständlich verfolgt eine computergestützte Steuereinrichtung ständig die Lagerpositionen der Stuckguter 10 einschließlich der jeweiligen Positionen innerhalb des Pufferschachts 4.

Bei einer anderen Weiterbildung der Ergänzung des automatisierten Lagers weist das Bediengerät zwei Pufferschächte auf. Ein Beispiel einer solchen Ausführungsform ist in Figur 3 skizziert. Auch hier sind - wie bei der Ausführungsform gemäß Figur 2 - mehrere Abgabestellen vorgesehen, die beispielsweise als ein sich über die gesamte Länge des Regals 1 erstreckendes Förderband 15 ausgebildet sind. Wesentliches Merkmals dieser Ausführungsform ist es, dass der zweite Pufferschacht 6, der bei der Ausführungsform gemäß Figur 3 oberhalb des ersten Pufferschachts 5 angeordnet ist, relativ zu dem ersten Pufferschacht 5 an dem Bediengerät 3' bewegbar ist. Dies erlaubt das nachfolgend beschriebene Auslagerungsverfahren.

Zunächst wird das Bediengerät 3' entlang der senkrechten Führungsschiene 8 und diese wiederum entlang der waagerechten Führungsschiene 9 derart verfahren, dass sich das obere Ende des ersten Pufferschachts 5 an dem unteren Ende desjenigen Lagerschachts 2 befindet, aus dem ein Stückgut ausgelagert werden soll. Es sei angenommen, dass sich das auszulagernde Stückgut innerhalb einer Reihe von in dem Lagerschacht 2 angeordneten Stückgüter befindet. Dann wird die am unteren Ende des Lagerschachts 2 angeordnete Sperr- und Auslöseeinrichtung 12 derart betätigt, dass sich sämtliche unterhalb des auszulagernden Stückguts in dem Lagerschacht 2 befindliche Stückgüter in den ersten Pufferschacht 5 bewegen. Dann wird das Bediengerät 3' derart bewegt, dass das obere Ende des zweiten Lagerschachts 6 an dem unteren Ende des Lagerschachts positioniert wird, in dem sich nunmehr das auszulagernde Stückgut an der untersten Position, das heißt unmittelbar an der Sperr- und Auslöseeinrichtung 12 befindet. Dann wird die Sperr- und Auslöseeinrichtung betätigt, so dass das auszulagernde Stückgut in dem zweiten Pufferschacht 6 rutscht. Sofern jeweils nur ein Stückgut auf diese Weise ausgelagert werden soll, braucht der zweite Pufferschacht 6 lediglich so ausgebildet zu sein, dass er ein Stückgut aufnehmen kann. Da in diesem Fall stets nur ein Stückgut aufzunehmen ist, soll unter den Begriff des "zweiten Pufferschachts" auch jede beliebige Einrichtung fallen, die in der Lage ist, ein Stückgut aufzunehmen (obwohl in diesem Fall eigentlich nicht mehr von einem "Schacht" gesprochen werden kann).

Sofern mehrere auszulagernde Stückgüter in demselben Schacht 2 unmittelbar hintereinander angeordnet sind, können diese auch unmittelbar hintereinander in den zweiten Pufferschacht 6 aufgenommen werden.

Anschließend wird der zweite Pufferschacht zu einer nächstliegenden Abgabestelle gefahren, vorzugsweise - wie in Figur 3 gestrichelt dargestellt ist - entlang des Pfeils 18 nach oben zu einer Rutsche 19 gefahren, wo das auszulagernde Stückgut 10 (oder die auszulagernden Stückgüter) auf ein sich entlang des Regals 1 erstreckendes Förderband 15 übergeben wird. Es ist denkbar, dass der zweite Pufferschacht 6 auf seinen Weg nach oben einen Zwischenstop bei einem weiteren Lagerschacht 2 einlegt, um dort gegebenenfalls weitere auszulagernde Stückgüter, die sich unmittelbar an der jeweiligen Sperre 12 befinden, aufzunehmen.

Während der zweite Pufferschacht 6 zu einer nächstliegenden Abgabestelle gefahren wird, wird das obere Endes des ersten Pufferschachts 5 wieder an das untere Ende desjenigen Lagerschachts 2 herangefahren, aus dem die nicht auszulagernden Stückgüter aufgenommen wurden. Die in dem ersten Pufferschacht 5 enthaltenen Stückgüter 10 werden dann zurück in den Lagerschacht 2 geschoben, wie es in Figur 3 durch den Pfeil 20 angedeutet ist. Es ist auch denkbar, dass die in dem ersten Pufferschacht 5 enthaltenen Stückgüter in einen anderen Lagerschacht 2 eingeschoben werden oder dass ein Teil der darin enthaltenen Stückgüter in einen ersten Lagerschacht 2 und der verbleibende Teil in einen zweiten Lagerschacht 2 hineingeschoben werden. Die Vorgänge des Aufnehmens nicht auszulagernder Stückgüter aus Lagerschächten 2 in den ersten Pufferschacht 5 und des Aufnehmens auszulagernder Stückgüter durch den Pufferschacht 6 sowie des Zurückschiebens nicht auszulagernder Stückgüter in die Lagerschächte 2 und des Übergebens auszulagernder Stückgüter an die Abgabestellen bzw. das Transportband 15 können sich auf vielfältige Weise überlappen. Eine elektronische Steuereinrichtung sorgt hier für eine Optimierung, um möglichst kurze Fahrwege und somit eine hohe Auslagerungsfrequenz zu erreichen.

Bei alternativen Ausführungsformen kann der zweite Pufferschacht 6 auch unter dem ersten Pufferschacht 5 angeordnet sein, wobei dann das Förderband 15 unterhalb der Lagerschächte 2 angeordnet wäre. Es sind auch Ausführungsformen denkbar, bei denen der erste Pufferschacht 5 und der zweite Pufferschacht 6 derart an der senkrechten Führungsschiene bzw. dem Bediengerät 3 befestigt sind, dass sie senkrecht aneinander vorbeifahren können. Darüber hinaus kann der erste Pufferschacht auf der einen Seite der Führungsschiene und der zweite Pufferschacht auf der anderen Seite der Führungsschiene angeordnet sein. Steuerungstechnisch besteht die Möglichkeit, dass der zweite Pufferschacht stets relativ zu dem ersten Pufferschacht 5 bewegt wird oder dass alternativ beide Pufferschächte unabhängig voneinander relativ zu der senkrechten Führungsschiene 8 bewegt werden.

Bei einer weniger bevorzugten alternativen Ausführungsform können die Lagerschächte auch waagerecht angeordnet und Greifeinrichtungen an den Pufferschächten der Bediengeräte vorgesehen sein, die die hintereinander in den Lagerschächten angeordneten Stückgüter in die jeweiligen Pufferschächte ziehen. Auch kann an den Lagerschächten selbst eine Schiebeeinrichtung angeordnet sein, die die in dem Lagerschacht enthaltenen Stückgüter hinausschiebt, wobei die Schiebeeinrichtung entweder aktiv gesteuert oder von dem Bediengerät betätigt sein kann. Die Pufferschächte des Bediengeräts können bei diesen Ausführungsformen ebenfalls waagerechte Auflageteller sein, die beidseitig von Backengreifer oder Führungsschienen begrenzt werden. Bei dieser Ausführungsform läuft das Auslagerungsverfahren wie folgt ab: Zunächst wird der erste waagerechte Pufferschacht an den Lagerschacht herangefahren, in dem sich, beispielsweise an der vierten Position, das auszulagernde Stückgut befindet. Der Backengreifer des ersten Pufferschachts (Auflagetellers) wird soweit in den Lagerschacht hinein gefahren, dass er die vordersten (beispielsweise drei) Stückgüter greifen kann, die vor dem auszulagernden Stückgut lagern. Diese werden dann in den ersten Pufferschacht (das heißt auf den ersten Auflageteller) gezogen. Anschließend wird der zweite Pufferschacht (zweite Auflageteller) an dem Lagerschacht (Lagerfach) positioniert. Der Backengreifer des zweiten Pufferschachts greift dann das auszulagernde Stückgut und zieht dies auf den Auflageteller des zweiten Pufferschachts. Anschließend wird der zweite Pufferschacht zu der Abgabestelle gefahren (beispielsweise oberhalb des Regals), während der erste Pufferschacht mit den nicht auszulagernden Stückgütern wieder zurück zu dem Lagerschacht gefahren wird und die nicht auszulagernden Stückgüter in den Lagerschacht zurückgeschoben werden.

## Patentansprüche

1. Verfahren zum Auslagern wenigstens eines Stückguts aus einem automatisierten Lager für eine Vielzahl von Stückgütern unterschiedlicher Art und Abmessungen,
wobei das Lager mehrere entlang einer ersten Raumkoordinate nebeneinander angeordnete Lagerschächte, ein in der ersten Raumkoordinate und wenigstens in einer dazu quer verlaufenden zweiten Raumkoordinate verfahrbares Bediengerät aufweist,
wobei das Bediengerät einen Pufferschacht aufweist, der mehrere Stückgüter aufnehmen kann,
wobei sich das wenigstens eine auszulagernde Stückgut an einer bekannten Position innerhalb einer Reihe von in einem Lagerschacht enthaltenen Stückgütern unterschiedlicher Art befindet,
wobei:
a) ein erstes Ende des Pufferschachts an ein erstes Ende des Lagerschachts herangefahren wird,
b) das wenigstens eine auszulagernde Stückgut und sämtliche gegebenenfalls zwischen dem ersten Ende des Lagerschachts und dem wenigstens einen auszulagernden Stückgut vorhandenen Stückgüter in den Pufferschacht bewegt werden,
c) der Pufferschacht zu einer Abgabestelle zur Übernahme auszulagernder Stückgüter von dem Bediengerät gefahren und das wenigstens eine auszulagernde Stückgut in die Abgabestelle bewegt wird, und
d) das erste Ende des Pufferschachts wieder an das erste Ende desselben oder eines anderen Lagerschachts herangefahren wird und die in dem Pufferschacht verbliebenen Stückgüter in den Lagerschacht hineinbewegt werden,
**dadurch gekennzeichnet,**
**daß** mehrere Abgabestellen in dem Regallager vorgesehen sind, wobei sich jede Abgabestelle an einem oberen Ende eines geneigten Abgabeschachts befindet und an den Abgabestellen üergebene Stückgüter in den zugehörigen Abgabeschacht rutschen,
**daß** im Schritt c) der Pufferschacht zu einer Abgabestelle gefahren und das wenigstens eine auszulagernde Stückgut in den zugehörigen Abgabeschacht bewegt wird, wobei die Schritte a) bis d) mehrfach wiederholt werden, so daß sich eine Anzahl auszulagernder Stückgüter in wenigstens einem der mehreren Abgabeschächte ansammelt, und
**daß** die in dem wenigstens einen Abgabeschacht angesammelten auszulagernden Stückgüter nach Freigabe einer am unteren Ende des Abgabeschachts angeordneten Sperre auf eine Fördereinrichtung übergeben und von der Fördereinrichtung zu einem Ausgabeplatz transportiert werden.

2. Verfahren zum Auslagern eines Stückguts aus einem automatisierten Lager nach Anspruch 1, **dadurch gekennzeichnet,**
**daß** die Lagerschächte geneigte Lagerschächte sind,
wobei das erste Ende des Lagerschachts das untere Ende ist und jeder Lagerschacht an dem unteren Ende eine Sperre zum Halten der in dem Lagerschacht liegenden Stückgüter aufweist,
wobei im Schritt b) die Sperre derart freigegeben wird, daß das auszulagernde Stückgut und sämtliche gegebenenfalls in dem Lagerschacht unterhalb des auszulagernden Stückguts vorhandenen Stückgüter in den Pufferschacht eintreten, und
wobei im Schritt d) das erste Ende des Pufferschachts an das untere Ende des Lagerschachts herangefahren wird und die in dem Pufferschacht enthaltenen Stückgüter in den Lagerschacht hinaufgeschoben werden.

3. Verfahren zum Auslagern eines Stückguts aus einem automatisierten Lager nach Anspruch 1 oder 2, **dadurch gekennzeichnet, daß** als Abgabeschächte Schächte verwendet werden, die zur Lagerung von vielen gleichartigen, relativ häufig angeforderten Stückgütern (Schnelldrehern) vorgesehen, aber ungenutzt sind.

4. Automatisiertes Lager mit einer Vielzahl von Stückgütern (10) unterschiedlicher Art und Abmessungen,
wobei das Lager wenigstens ein Regal (1) aus mehreren Lagerebenen, die jeweils mehrere entlang einer ersten Raumkoordinate nebeneinander angeordnete Lagerschächte (2) aufweisen, ein vor dem Regal in der ersten Raumkoordinate und wenigstens in einer dazu quer verlaufenden zweiten Raumkoordinate verfahrbares Bediengerät (3) und eine Abgabestelle zur Übernahme auszulagernder Stückgüter von dem Bediengerät aufweist,
wobei das Bediengerät einen Pufferschacht (4) aufweist, der mehrere Stückgüter aufnehmen kann und der mit einem Ende an ein Ende jedes Lagerschachts (2) derart heranfahrbar ist, daß aus dem angefahrenen Lagerschacht wenigstens ein auszulagerndes Stückgut, weiches an einem beliebigen Ort innerhalb des Lagerschachts lagert, sowie sämtliche zwischen dem Ende des Lagerschachts und dem wenigstens einen auszulagernden Stückgut lagernden Stückgüter in den Pufferschacht übernommen werden,
wobei zumindest in einem Teil der Lagerschächte jeweils Stückgüter unterschiedlicher Art gelagert sind,
wobei mehrere Abgabestellen in dem Regallager vorgesehen sind,
wobei sich jede Abgabestelle an einem oberen Ende eines zugehörigen geneigten Abgabeschachts (13) befindet, so daß an den Abgabestellen übergebene Stückgüter in den zugehörigen Abgabeschacht (13) rutschen können,
wobei die Abgabeschächte (13) am unteren Ende eine das Weiterrutschen der Stückgüter verhindernde Sperre (14) aufweisen und so ausgebildet sind, daß mehrere Stückgüter unterschiedlicher Art in dem Abgabeschacht gesammelt werden, wobei die Sperre (14) derart freigebbar ist, daß die in dem Abgabeschacht angesammelten Stückgüter auf eine die Stückgüter zu einem Ausgabeplatz transportierende Fördereinrichtung (15) übergeben werden können.

5. Automatisiertes Lager nach Anspruch 4, **dadurch gekennzeichnet, daß** die Lagerschächte (2) derart geneigt sind, daß sie zum Bediengerät (3) hin abfallen, und jeder Lagerschacht an dem unteren Ende eine Sperre (12) zum Halten der in dem Lagerschacht liegenden Stückgüter aufweist, wobei der Pufferschacht (4) ebenfalls geneigt ist und mit seinem oberen Ende an das untere Ende jedes Lagerschachts derart heranfahrbar ist, daß eine Ubernahme von Stückgutern aus aem angelaufenen Lagerschacht möglich ist.

6. Automatisiertes Lager nach Anspruch 5, **dadurch gekennzeichnet, daß** mehrere weitere geneigte Lagerschächte vorgesehen sind, die vom Bediengerät weg abfallen, so daß die weiteren geneigten Lagerschächte von dem Bediengerät an ihrem oberen Ende befüllt werden können, und
daß die Abgabeschächte parallel zu den weiteren Lagerschächten angeordnet sind.

7. Automatisiertes Lager nach einem der Ansprüche 4 - 6, **dadurch gekennzeichnet, daß** die Sperren der Abgabeschächte jeweils mit einem separat ansteuerbaren Auslösemechanismus zum Freigeben der Sperre gekoppelt sind.

8. Automatisiertes Lager nach einem der Ansprüche 4 - 6, **dadurch gekennzeichnet, daß** die Sperren der Abgabeschächte von einem mit der Fördereinrichtung gekoppelten Auslösemechanismus freigebbar sind.

## Claims

1. A method of removing at least one article from an automated store for a plurality of articles of different type and dimensions, wherein the store has a plurality of storage shafts arranged next to one another along a first spatial coordinate and a service device which is movable in the first spatial coordinate and at least in a second spatial coordinate extending transversely thereto, wherein the service device has a buffer shaft, which can accommodate a plurality of articles, wherein the at least one article to be removed is located at a known position within a series of articles of different type contained in a storage shaft, wherein:
a) a first end of the buffer shaft is advanced to a first end of the storage shaft,
b) the at least one article to be removed and all the articles potentially present between the first end of the storage shaft and the at least one article to be removed are moved into the buffer shaft,
c) the buffer shaft is moved by the service device to a delivery station for accepting articles to be removed and the at least one article to be removed is moved into the delivery station, and
d) the first end of the buffer shaft is again advanced to the first end of the same or another storage shaft and the articles remaining in the buffer shaft are moved into the storage shaft,
**characterised in that** a plurality of delivery stations are provided in the rack store, wherein each delivery station is located at an upper end of an inclined delivery shaft and articles transferred to the delivery stations slide into the associated delivery shaft,
that in step c) the buffer shaft is moved to a delivery station and the at least one article to be removed is moved into the associated delivery shaft, wherein the steps a) to d) are repeated a number of times so that a number of articles to be removed accumulate in at least one of the plurality of delivery shafts, and that the articles to be removed accumulated in the at least one delivery shaft are transferred on to a conveying device after a release of a barrier arranged at the lower end of the delivery shaft and are transported by the conveying device to an output location.

2. A method of removing an article from an automated store as claimed in Claim 1, **characterised in that** the storage shafts are inclined storage shafts, wherein the first end of the storage shaft is the lower end and each storage shaft has a barrier at the lower end for retaining the articles situated in the storage shaft, whereby in step b) the barrier is released such that the articles to be removed and all the articles potentially present in the storage shaft below the articles to be removed enter into the buffer shaft and wherein in step d) the first end of the buffer shaft is advanced to the lower end of the storage shaft and the articles contained in the buffer shaft are pushed up into the storage shaft.

3. A method of removing an article from an automated store as claimed in Claim 1 or 2, **characterised in that** the shafts are used as delivery shafts which are provided for the storage of many similar and relatively frequently requested articles (rapid turnover articles) but are unused.

4. An automated store with a plurality of articles (10) of different types and dimensions, wherein the store includes at least one storage rack (1) comprising of plurality of storage planes, which each have a plurality of storage shafts (2) arranged next to one another along a first spatial coordinate, a service device (3) movable in front of the storage rack in the first spatial coordinate and at least one second spatial coordinate extending transversely thereto and a delivery station for accepting articles to be removed from the service device, wherein the service device includes a buffer shaft (4), which can accommodate a plurality of articles and one end of which may be advanced to one end of a storage shaft (2) such that at least one article to be removed, which is stored at any desired location within the storage shaft and all the articles stored between the end of the storage shaft and the at least one article to be removed are accepted from the advanced storage shaft into the buffer shaft, wherein articles of different types are stored in at least a portion of the storage shaft, wherein a plurality of delivery stations are provided in the rack store, wherein each delivery station is situated at an upper end of an associated inclined delivery shaft (13) so that articles transferred to the delivery stations can slide into the associated delivery shaft (13), whereby the delivery shafts (13) have a barrier (14) at the lower end which prevents further sliding of the articles and are so constructed that a plurality of articles of different types are accumulated in the delivery shaft, wherein the barrier (14) may be released such that the articles accumulated in the delivery shaft can be transferred on to a conveying device (15) transporting the articles to an output location.

5. An automated store as claimed in Claim 4, **characterised in that** the storage shafts (2) are inclined such that they slope down to the service device (3) and each storage shaft has a barrier (12) at the lower end for retaining the articles situated in the storage shaft, whereby the buffer shaft (4) is also inclined and its upper end may be advanced to the lower end of each storage shaft such that the acceptance of articles from the advanced storage shaft is possible.

6. An automated store as claimed in Claim 5, **characterised in that** a plurality of further inclined storage shafts are provided, which slope down away from the service device so that the further inclined storage shafts can be filled by the service device at their upper end and that the delivery shafts are arranged parallel to the further storage shafts.

7. An automated store as claimed in one of Claims 4-6, **characterised in that** the barriers of the delivery shafts are coupled to a respective, separately controllable release mechanism for releasing the barrier.

8. An automated store as claimed in one of Claims 4-6, **characterised in that** the barriers of the delivery shafts are releasable by a release mechanism coupled to the conveying device.

## Revendications

1. Procédé pour le déstockage d'au moins un article hors d'un magasin automatisé pour une pluralité d'articles de types et de dimensions dififérent(e)s,
dans lequel le magasin comprend plusieurs cages de magasin agencées les unes à côté des autres le long d'une première coordonnée dans l'espace, un appareil de service déplaçable suivant la première coordonnée dans l'espace et dans au moins une seconde coordonnée dans l'espace perpendiculaire à la première,
dans lequel l'appareil de service comprend une cage tampon qui est capable de recevoir plusieurs articles,
dans lequel ledit au moins un article à déstocker se trouve à une position connue à l'intérieur d'une rangée d'articles de types différents contenus dans une cage de magasin,
dans lequel :
a) une première extrémité de la cage tampon est approchée d'une première extrémité de la cage de magasin,
b) ledit au moins un article à déstocker et la totalité des articles éventuellement présents entre la première extrémité de la cage de magasin et ledit au moins un article à déstocker sont déplacés jusque dans la cage tampon,
c) la cage tampon est déplacée par l'appareil de service jusqu'à un poste de distribution pour la reprise d'articles à déstocker, et ledit au moins un article à déstocker est déplacé vers l'emplacement de distribution, et
d) la première extrémité de la cage tampon est ramenée à la première extrémité de la même cage de magasin ou d'une autre cage de magasin, et les articles restants dans la cage tampon sont déplacés jusque dans la cage de magasin,
**caractérisé en ce que**
il est prévu plusieurs postes de distribution dans le magasin à rayonnages, chaque poste de distribution se trouvant à une extrémité supérieure d'une cage de distribution inclinée et des articles remis au poste de distribution glissent en entrant dans la cage de distribution associée,
**en ce que** dans l'étape c), la cage tampon est déplacée jusqu'à un poste de distribution et ledit au moins un article à déstocker est déplacé jusque dans la cage de distribution associée, et les étapes a) à d) sont répétées plusieurs fois, de sorte qu'un certain nombre d'articles à déstocker se rassemblent dans l'une au moins des plusieurs cages de distribution, et
**en ce que** les articles à déstocker qui se sont rassemblés dans ladite au moins une cage de distribution sont remis, après libération d'une fermeture agencée à l'extrémité inférieure de la cage de distribution, vers un dispositif de convoyage, et sont transportés par le dispositif de convoyage vers un emplacement de distribution.

2. Procédé pour le déstockage d'un article hors d'un magasin automatisé selon la revendication 1, **caractérisé en ce que**
les cages de magasin sont des cages de magasin inclinées,
dans lequel la première extrémité de la cage de magasin est l'extrémité inférieure et chaque cage de magasin comporte à l'extrémité inférieure une fermeture pour maintenir les articles disposés dans la cage de magasin,
dans lequel dans l'étape b) la fermeture est libérée de telle manière que l'article à déstocker et la totalité des articles éventuellement présents dans la cage de magasins au-dessous de l'article à déstocker pénètrent dans la cage tampon, et
dans lequel dans l'étape d) la première extrémité de la cage tampon est approchée de l'extrémité inférieure de la cage de magasin, et les articles contenus dans la cage tampon sont poussés en montant jusque dans la cage de magasin.

3. Procédé pour le déstockage d'un article hors d'un magasin automatisé selon la revendication 1 ou 2, **caractérisé en ce que** l'on utilise à titre de cages de distribution des cages prévues pour le stockage d'un grand nombre d'articles de même sorte et relativement souvent requis (tourniquets rapides), mais inutilisées.

4. Magasin automatisé comprenant une pluralité d'articles (10) de types et de dimensions différent(e)s,
dans lequel le magasin comprend au moins un rayonnage (1) composé de plusieurs niveaux de rayonnages, qui comprennent chacun plusieurs cages de magasin (2) agencées les unes à côté des autres le long d'une première coordonnée dans l'espace, un appareil de service (3) déplaçable suivant la première coordonnée dans l'espace et suivant au moins une seconde coordonnée dans l'espace perpendiculaire à la première, et un poste de distribution pour la remise d'articles à déstocker par l'appareil de service,
dans lequel l'appareil de service comprend une cage tampon (4) qui est capable de recevoir plusieurs articles et dont une extrémité peut être approchée d'une extrémité de chaque cage de magasin (2) de telle manière qu'au moins un article à déstocker, qui se trouve à un emplacement quelconque à l'intérieur de la cage de magasin, ainsi que la totalité des articles qui se trouvent entre l'extrémité de la cage de magasin et ledit au moins un article à déstocker sont passés de la cage de magasin approchée vers la cage tampon,
dans lequel des articles de types différents sont stockés au moins dans une partie des cages de magasin,
dans lequel plusieurs postes de distribution sont prévus dans le magasin à rayonnages,
dans lequel chaque poste de distribution se trouve à une extrémité supérieure d'une cage de distribution inclinée associée (13), de sorte que les articles remis au poste de distribution peuvent glisser jusque dans la cage de distribution associée (13),
dans lequel les cages de distribution (13) comportent à l'extrémité inférieure une fermeture (14) qui empêche aux articles de glisser plus loin, et sont réalisées de telle manière que plusieurs articles de type différent se rassemblent dans la cage de distribution, et la fermeture (14) est susceptible d'être libérée de telle manière que les articles qui se sont rassemblés dans la cage de distribution peuvent être remis à un dispositif de convoyage (15) qui transporte les articles vers un emplacement de distribution.

5. Magasin automatisé selon la revendication 4, **caractérisé en ce que** les cages de magasin (2) sont inclinées de telle manière qu'elles descendent vers l'appareil de service (3), et chaque cage de magasin comporte à l'extrémité inférieure une fermeture (12) pour retenir les articles qui se trouvent dans la cage de magasin, et la cage tampon (4) est également inclinée et peut être approchée par son extrémité supérieure vers l'extrémité inférieure de chaque cage de magasin, de sorte qu'une reprise des articles hors de la cage de magasin approchée est possible.

6. Magasin automatisé selon la revendication 5, **caractérisé en ce qu'**il est prévu plusieurs autres cages de magasin inclinées, qui descendent en éloignement de l'appareil de service, de sorte que les autres cages de magasin inclinées peuvent être remplies par l'appareil de service à leur extrémité supérieure, et
**en ce que** les cages de distribution sont agencées parallèlement aux autres cages de magasin.

7. Magasin automatisé selon l'une des revendications 4 à 6, **caractérisé en ce que** les fermetures des cages de distribution sont respectivement accouplées à un mécanisme de déclenchement à pilotage séparé pour la libération des fermetures.

8. Magasin automatisé selon l'une des revendications 4 à 6, **caractérisé en ce que** les fermetures des cages de distribution sont susceptibles d'être libérées par un mécanisme de déclenchement accouplé au dispositif de convoyage.
